(19) Europäisches Patentamt
European Patent Office
Office européen des brevets

(11) **EP 1 637 890 B1**

(12) **EUROPÄISCHE PATENTSCHRIFT**

(45) Veröffentlichungstag und Bekanntmachung des Hinweises auf die Patenterteilung:
**12.09.2012 Patentblatt 2012/37**

(51) Int Cl.:
*G01P 3/48* *(2006.01)*  *G01R 31/34* *(2006.01)*
*G01M 13/00* *(2006.01)*  *G01P 3/44* *(2006.01)*
*G01P 3/487* *(2006.01)*

(21) Anmeldenummer: **05005933.6**

(22) Anmeldetag: **18.03.2005**

(54) **Verfahren zur berührungslosen Drehzahlmessung für Elektromotoren**

Method for contactless determination of the speed of electric motors

Procédé pour la détermination sans contact de la vitesse d'un moteur électrique

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **01.09.2004 DE 102004042664**

(43) Veröffentlichungstag der Anmeldung:
**22.03.2006 Patentblatt 2006/12**

(73) Patentinhaber: **WILO SE**
**44263 Dortmund (DE)**

(72) Erfinder:
• **Meier-Wagner, Michael**
**44269 Dortmund (DE)**
• **Greitzke, Stephan**
**44287 Dortmund (DE)**

(74) Vertreter: **Cohausz Hannig Borkowski Wißgott**
**Patent- und Rechtsanwaltskanzlei**
**Schumannstrasse 97-99**
**40237 Düsseldorf (DE)**

(56) Entgegenhaltungen:
EP-A- 0 208 967    DE-A1- 3 722 805
DE-A1- 4 316 783   FR-A- 2 733 837
US-A- 4 761 703    US-A- 5 530 343
US-A- 5 680 025    US-B1- 6 208 132

• **THORSEN O ET AL: "Condition monitoring methods, failure identification and analysis for high voltage motors in petrochemical industry" ELECTRICAL MACHINES AND DRIVES, 1997 EIGHTH INTERNATIONAL CONFERENCE ON (CONF. PUBL. NO. 444) CAMBRIDGE, UK 1-3 SEPT. 1997, LONDON, UK,IEE, UK, 1. September 1997 (1997-09-01), Seiten 109-113, XP006503646 ISBN: 0-85296-696-2**
• **HENAO H ET AL: "A FREQUENCY-DOMAIN DETECTION OF STATOR WINDING FAULTS IN INDUCTION MACHINES USING AN EXTERNAL FLUX SENSOR" IEEE TRANSACTIONS ON INDUSTRY APPLICATIONS, IEEE SERVICE CENTER, PISCATAWAY, NJ, US, Bd. 39, Nr. 5, September 2003 (2003-09), Seiten 1272-1279, XP001178072 ISSN: 0093-9994**

EP 1 637 890 B1

**Beschreibung**

Die vorliegende Erfindung betrifft ein Verfahren zur berührungslosen Überwachung des Betriebszustandes eines Elektromotors, insbesondere eines als Asynchronmotor oder elektronisch kommutierter Motor ausgebildeten Motors einer Pumpe, der zumindest eine Motorwelle und zumindest ein Lager zur Lagerung der zumindest einen Motorwelle aufweist, wobei zur Erfassung des Betriebszustandes des Elektromotors mindestens ein im Bereich des Streufeldes des Motors angeordnetes elektromagnetisches Sensorelement zur Erzeugung eines auswertbaren Messsignals verwendet wird, wobei das Messsignal die Information über den Betriebszustand des Elektromotors trägt.

Die Drehzahlermittlung von Asynchronmaschinen an Hand eines induzierten elektrischen Signals ist aus der DE 33 39 299 A1 bekannt. Hier wird die Statorwicklung zum Messen verwendet, wobei das in ihr induzierte Signal über aufwendige Filter aufgearbeitet werden muss, um ein charakteristisches Frequenzsignal zu erhalten, aus dem die Drehzahl ermittelt werden kann. Da bei dieser Schaltungsanordnung im Bereich hoher Stromstärken gemessen wird, werden an die Meßeinrichtungen hohe Ansprüche in Bezug auf Auslegung bzw. Baugröße der Meßgeräte und Meßwertauswertung gestellt, was mit unnötig hohen Kosten verbunden ist. Da die Meßspule die Statorwicklung selbst ist, ergibt sich keine Möglichkeit, die Meßspule- in Länge, Durchmesser, Drahtdicke und/oder Windungszahl an die Meßanforderungen anzupassen.

Eine Alternative stellt die aus der DE,31 02 655 A1 bekannte Anordnung dar, bei der Sonden im oder am Luftspalt der Maschine angeordnet sind, die die zeitliche Änderung des magnetischen Streufeldes in der Maschine und dadurch die Drehzahl des Rotors erfassen. Bei dieser Realisierung ist jedoch ein erheblicher Messaufwand nötig. Außerdem ist die Anordnung aufgrund der empfindlichen Sonden störanfällig und damit unzuverlässig.

Die DE 41 08 522 offenbart eine Vorrichtung zur Drehzahlmessung einer Asynchronmaschine durch Frequenzmessung eines Signals, dass in einer oder mehreren Gruppe(n) von Meßspulen induziert wird, die zusammen mit den Statorwicklungen gewickelt sind und in den Statornuten liegen, wobei die Gruppen von Meßspulen in Reihe geschaltet sind. Auch hier sind die Meßspulen an Bauform und Baugröße des Stators gekoppelt. Da die Meßspulen zusammen mit den Statorwicklungen gewickelt werden müssen, wird der Herstellungsprozess erheblich aufwendiger und teurer. Auch ist es erforderlich Rotor und Stator fast vollständig umzukonstruieren. Ein erheblicher Entwicklungsaufwand wird dadurch notwendig. Eine derartige Umsetzung der Drehzahlerfassung macht es aufgrund von Oberschwingungen im Meßsignal notwendig, mehrere Meßspulen zu verwenden, die zudem noch in Gruppen zusammengeschaltet werden. Dies erhöht wiederum die Herstellungs- und Wartungskosten, zumal die Meßspulen zu Wartungszwecken nur schwer zugänglich sind.

Neben der Betrachtung der Möglichkeit, die Drehzahl eines Elektromotors an Hand eines elektromagnetischen Sensorselements insbesondere anhand eines in eine Messpule induzierten Signals zu ermitteln, stellt die Überwachung des Betriebszustands des Elektromotors respektive einer von dem Elektromotor angetriebenen Pumpe eine zunehmend wichtiger werdende Aufgabe dar.

Umwälzpumpen in so genannter Nass- oder Trockenläuferbaüweise werden dafür zunehmend mit Klemmenkästen versehen, in denen eine Elektronik zur Überwachung des Betriebszustandes des Elektromotors respektive der Pumpe integriert ist. Aktuelle Betriebs- und/ oder Fehlerzustände wie beispielsweise die Motorwicklungstemperatur werden kontinuierlich erfasst, und können direkt angezeigt und/ oder zu einer Leitzentrale weitergeleitet werden. Kennzeichnend für derartige Zustandsüberwachungen ist die Tatsache, dass erst während oder gar erst nach dem Auftreten eines Fehlers eine Störmeldung abgegeben wird

Die WO 98/32214 A1 offenbart eine Anlauf- und Betriebssteuerung eines Einphasensynchronmotors mit einem PM-Rotor, die mindestens ein Sensorelement zur Messung des Rotorfeldes aufweist, wobei der bzw. die Sensor(en) durch Hallsensoren gebildet sind. Bei dem Sensorsignal wird die Amplitudenhöhe ausgewertet, so das insbesondere auf eine Blockade des Motors, die beispielsweise durch Eindringen von Fremdkörpern in eine vom Motor angetriebenen Pumpe erfolgen könnte, detektiert werden kann. Eine Betriebsstörung in Form einer Motorblockierung kann in diesem Fall erst nach ihrem Auftreten gemeldet werden.

Für viele kritische Anlagen ist es dagegen notwendig, bereits vor dem Auftreten eines Fehlers oder vor dem Ausfall einer Pumpe eine entsprechende Warnmeldung im Sinne einer Schadenfrüherkennung (Early-failure-detection) abzugeben.

Zu den häufigsten Ausfallmechanismen von Pumpen gehört der Verschleiß der Lager. Hier sind insbesondere die Gleitlager bei Nassläuferpumpen sowie die Wälzlager bei Trockenläuferpumpen zu nennen. Der Verschleiß der Lager kann im schlimmsten Fall zu einem Lagerschaden führen. Beispielsweise kann bei einem defekten Gleitlager einer Nassläuferpumpe zu einem Anlaufen des Rotors an den Spalttopf oder das Spaltrohr des Pumpenaggregats kommen, wodurch das Spaltrohr oder der Spalttopf durchgeschliffen werden kann und das geförderte Medium in den elektrischen Bereich des Pumpenmotors gelangen kann. Das Eintreten des Fördermediums in den Pumpenmotor kann schwerwiegende Folgefehler verursachen, deren Behebung hohe Kosten erfordern kann.

Aufgabe der vorliegenden Erfindung ist es, eine Überwachung des Betriebszustandes eines Elektromotors zu realisieren, mit welchem eine frühzeitige Detektion eines fehlerhaften Betriebszustands, insbesondere des Lagerverschleißes der Lager des Elektromotors, einfach realisiert werden kann, wodurch ein Höchstmaß an Sicherheit und eine Reduzierung des Wartungsaufwands respektive der damit verbundenen Kosten gewährleistet werden kann.

Diese Aufgabe wird durch das Verfahren nach Anspruch 1 gelöst.

Es wird ein universal einsetzbares Verfahren vorgeschlagen, bei dem der Betriebszustand des Elektromotors insbesondere an der Welle des Elektromotors auftretende Schwingungen oder Drehungleichförmigkeiten ermittelt werden können.

Auf die Verwendung von verschleißbehafteten mechanischen Mitteln zur Messung der Drehzahl und/ oder der Rotorlage kann folglich verzichtet werden. Als Meßmittel dient bei dem Verfahren eine preiswerte, handelsübliche Meßspule, die im Vergleich zum Stator des Motors klein und nicht an die Bauform und Baugröße des Motors gebunden ist. Der Elektromotor muss folglich nicht umkonstruiert und an das Verfahren angepasst werden.

Insbesondere ist eine individuelle Anpassung der Meßspule an einen beliebigen Elektromotor unkompliziert und einfach möglich, da ihre Platzierung nicht an einen bestimmten Bereich des Motors gebunden ist, vorzugsweise jedoch in der Nähe des Stators erfolgt.

Die Meßspule liefert ein direkt auswertbares Signal, bei dessen Auswertung auf einfache und bekannte Demodulationsverfahren zurückgegriffen wird. Die Auswerteschaltung basiert auf elektronischen Standardbauteilen.

Die Auswerteschaltung wird vorzugsweise in dem Klemmenkasten des Elektromotors untergebracht, der für ein gutes EMV-Verhalten vorzugsweise aus einem magnetfeldabschirmenden Material bestehen kann. Das Verfahren zeichnet sich durch eine geringe Störanfälligkeit und hohe Zuverlässigkeit bei geringem Wartungsaufwand aus. Ein Mikrocontroller zur Auswertung des demodulierten Signals ist in der Auswerteschaltung vorhanden.

Elektromotormodelle unterschiedlicher Leistung und Bauart, die identische Motorgehäuse besitzen, bieten insbesondere die Möglichkeit, den Klemmenkasten samt Auswerteschaltung und Meßspule unverändert und universal bei geringem Montageaufwand innerhalb und außerhalb der Modellserien zu verwenden.

Erfindungsgemäß eignet sich das beschriebene Verfahren für die Detektion einer Blockierung des Elektromotors, die im Falle eines als Pumpe ausgeführten Elektromotors, die Zerstörung der die Pumpe beinhaltenden Vorrichtung nach sich ziehen kann. Auf eine Blockierung kann bei fehlender Modulation der in der Meßspule induzierten Spannung unmittelbar geschlossen werden. In diesem Fall wird eine Störmeldung in Form eines optischen oder akustischen Signals direkt oder durch Weiterleitung an eine Leittechnik ausgegeben. Das Verfahren bietet ferner die Möglichkeit, eine Drehzahlregelung einfach aufzubauen.

Allgemein dient das der Erfindung zugrunde liegende Verfahren der Überwachung und Erfassung des Betriebszustands eines Elektromotors respektive einer von dem Elektromotor angetriebenen Pumpe, wobei zur Erfassung des Betriebszustands ein elektromagnetisches Sensorelement verwendet wird, das in einer vorteilhaften Ausführung auch als Messspule ausgebildet ist.

Bei dem erfindungsgemäßen Verfahren zur Überwachung des Betriebszustands eines Elektromotors wird insbesondere der Rotor des Elektromotors auf eine Taumelbewegung überprüft. Unter einer Taumelbewegung wird im Folgenden eine Schwingung des Rotors verstanden, die durch eine Drehungleichförmigkeit der Welle entsteht und überwiegend auf ausgeschlagene und/ oder verschlissene Lager zurückzuführen ist.

Die Taumelbewegung des Rotors verursacht eine drehzahl- und/ oder eine rotorlageabhängige Änderung bzw. Schwankung der Amplitude (Modulation) des magnetischen Motorstreufelds. Dieser Effekt kommt durch die ständige geringfügige Änderung des Luftspalts zwischen dem Rotor und den Statorpolschuhen zustande und ist daher sowohl innerhalb als auch außerhalb des Motorgehäuses als ein moduliertes 50Hz-Messsignal erfassbar und auswertbar. Die Modulation des Motorstreufelds kann daher als Maß für den Verschleißzustand der Lager des Elektromotors respektive der von ihm angetriebenen Pumpe gewertet werden. Auf besonders einfache und wirtschaftliche Weise ist durch die Erfassung und Auswertung der Modulation eine Schadenfrüherkennung bei Elektromotoren und Pumpen realisierbar.

Weitere Vorteile und Merkmale der Erfindung ergeben sich aus der nachfolgenden Beschreibung und den in den Zeichnungen dargestellten Ausführungsbeispielen.

Es zeigen:

Figur 1: Eine Ausführungsvariante einer erfindungsgemäßen Motorpumpe

Figur 2: Ein qualitativer Verlauf des Statorstreufeldes in einem ortsfesten Punkt in der Nähe des Stators, wobei die den Stator speisende Wechselspannung die Frequenz $f_{Netz}$ = 50Hz besitzt

Figur 3: Ein qualitativer Verlauf des Rotorstreufeldes in einem ortsfesten Punkt in der Nähe des Stators für eine Drehzahl größer Null und deutlich kleiner als die Leerlaufdrehzahl

Figur 4: Eine additive Überlagerung der beiden Streufelder zu einem modulierten Motorstreufeld

Figur 5: Eine Ausführungsvariante einer erfindungsgemäßen Auswerteschaltung

Figur 6: schematische Darstellung einer elektromotorisch betriebenen Pumpe

Figur 7: Weitere Ausführungsvariante einer erfindungsgemäßen Motorpumpe

Figur 8: Beispielhaftes charakteristisches Oszillogramm des Messsignals $u_s(t)$ bei einem Elektromotor mit neuem, unverschlissenen Lagern

Figur 9: Beispielhaftes charakteristisches Oszillogramm des Messsignals $u_s(t)$ bei einem eingelaufenen Elektromotor mit Lagern mit erhöhtem Lagerspiel

Figur 10: Beispielhaftes charakteristisches Oszillogramm des Messsignals $u_s(t)$ bei einem Elektromotor mit Lagern mit unzulässig hohem Lagerspiel

Motorpumpen werden heutzutage zunehmend in Nassläuferbauweise ausgeführt, wobei der die Pumpe antreibende Elektromotor einen Rotor hat, der als Nassläufer in einem Nassraum in dem geförderten Medium umläuft. Der Naßraum ist durch ein Spaltrohr oder ein Spalttopf oder durch andere geeignete Dichtungsmittel von dem Trockenraum getrennt, in dem sich der Stator des Elektromotors befindet. Unter einem Stator wird im Folgenden der Teil eines Elektromotors verstanden, der die Statorwicklungen trägt.

Derartige Pumpen besitzen am Pumpengehäuse einen Druckstutzen und einen Saugstutzen. Im Laufraum des Pumpengehäuses befindet sich das Pumpenlaufrad, das drehfest mit der Motorwelle des Elektromotors verbunden ist.

Darüber hinaus besitzen Motorpumpen vielfach einen Klemmenkasten, der mit integrierten Steuerungselektroniken ausgerüstet ist, welche die von Sensoren gelieferte Drehzahlinformation des Motors verarbeiten und damit seinen Betriebszustand überwachen. Die Zustandsinformation kann direkt an der Pumpe oder über Schnittstellen an eine Gebäudeleittechnik weiter geleitet werden.

Die Erfassung der Drehzahl eines Asynchronmotors (ACM) und der Lage eines elektronisch kommutierten Motors (ECM) wird durch eine einfache Anordnung realisiert, die durch das folgende Verfahren beschrieben wird, das zunächst am Beispiel eines Asynchronmotors veranschaulicht wird.

Als Meßspule dient eine kleine Spule 2, die innerhalb des Motorstreufeldes, vorzugsweise im Klemmenkasten 3 des Motors 1, insbesondere einer Pumpe, angeordnet wird, deren Ausgangssignal in einer Auswerteschaltung 4 verarbeitet wird. Die Spule kann stirnseitig (wie in der Skizze 1 veranschaulicht) oder mantelseitig in der Nähe des Pumpenmotors außerhalb des Stators, angebracht sein. Durch das Motorstreufeld $\phi$, welches sich aus der Überlagerung von Statorstreufeld $\phi_S$ und Rotorstreufeld $\phi_R$ zusammensetzt, wird in der Spule eine mit der Frequenz $f_{Netz}$ der speisenden Statorspannung schwingende Wechselspannung $U_{spule}$ induziert, siehe Gleichung 1.

$$U_{spule} = d\phi/dt \qquad\qquad (1)$$

Bekanntermaßen rotiert das Statorfeld mit der Netzfrequenz $\omega_{Netz} = 2\pi f_{Netz}$ und das Rotorfeld mit der Frequenz $\omega_R$, deren Abhängigkeit vom Motorschlupf s (0% ...100%) durch Gleichung 2 beschrieben werden kann.

$$s = \omega_R / \omega_{Netz} \qquad\qquad (2)$$

Des Weiteren entspricht bekanntlich die Summe aus mechanischer Winkelgeschwindigkeit $\omega = 2\pi n_{mech}{}^{*}p$ ($n_{mech}$ sei Rotordrehzahl, p die Polpaarzahl) und Rotorfeldfrequenz $\omega_R$ der Statorfeldfrequenz $\omega_{Netz}=2\pi n_0{}^{*}p$, siehe Gleichung 3.

$$\omega_{Netz} = \omega_R + \omega \qquad\qquad (3)$$

Die Leerlaufdrehzahl $n_0$ einer Asynchronmaschine mit einer Polpaarzahl p ist durch Gleichung 4 gegeben,

$$n_0 = f_{Netz}/p \quad . \qquad\qquad (4)$$

Die Drehzahl des Motors ist folglich durch die Beziehung nach Gleichung 5, die durch Einsetzen von Gleichung 3 in Gleichung 2 erhalten werden kann, festgelegt.

$$n_{mech} = f_{Netz}(1-s) \qquad\qquad (5)$$

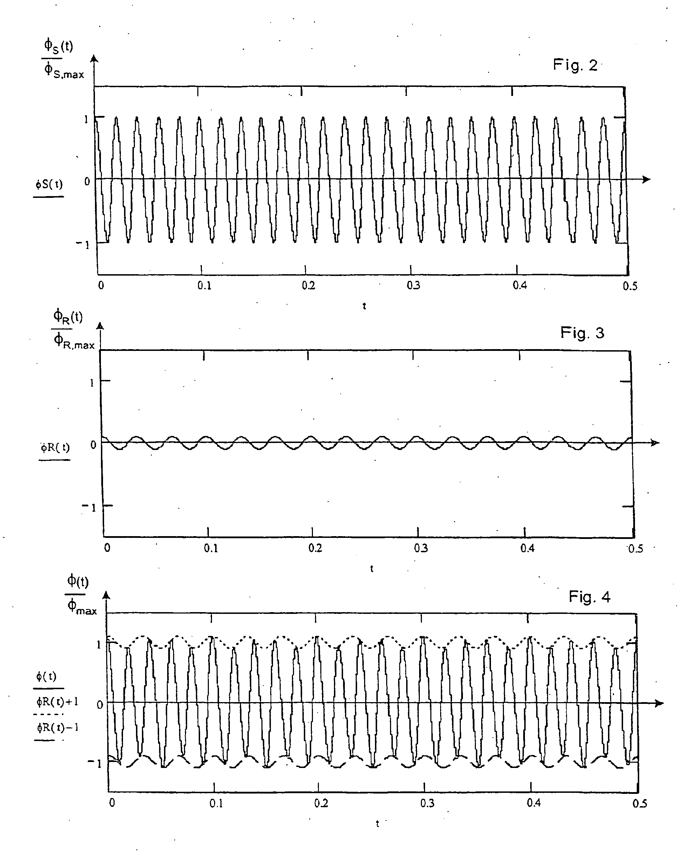

Die Drehzahl kann nicht direkt aus der gemessenen Ausgangsspannung der Meßspule ermittelt werden. Wesentlich für den Erhalt der Drehzahlinformation ist die Kenntnis des im Folgenden beschriebenen Zusammenhangs, der an Hand der in den Figuren 2 bis 4 dargestellten Diagramme veranschaulicht wird.

Das Statorstreufeld $\phi_S(t)$, das in Figur 2 für einen ortsfesten Punkt im Bereich des Stators dargestellt ist, rotiert in Abhängigkeit der Frequenz der den Stator speisenden Wechselspannung ebenfalls mit der Frequenz $\omega_{Netz} = 2\pi f_{Netz}$, beispielsweise $f_{Netz} = 50$ Hz. Das abhängig von der Drehzahl des Rotors schwingende Rotorstreufeld $\phi_R(t)$ besitzt relativ zum Statorstreufeld gesehen eine geringere Amplitude.

Im Stillstand (s=1) induziert das Statorstreufeld $\phi_S(t)$ in den ruhenden Wicklungen des Rotors einer Asynchronmaschine eine Wechselspannung gleicher Frequenz, die das Rotorstreufeld $\phi_R(t)$ aufbaut, das ebenfalls mit der Frequenz des Statorstreufeldes schwingt. Die Überlagerung der beiden Streufelder ergibt in diesem Falle gleicher Schwingfrequenz ein mittelwertfreies Motorstreufeld $\phi(t)$, mit gleichbleibender Amplitude.

Beginnt sich der Rotor zu drehen (0< s <1), reduziert sich nach Gleichung 3 die Rotorstreufeldfrequenz. Es ergibt sich ein Rotorstreufeld $\phi_R(t)$ nach Figur 3. Die Summe von Rotorstreufeld und Statorstreufeld ergibt in diesem Fall ein Gesamtfeld $\phi(t)$, das eine sinusförmig schwankende Amplitude aufweist, siehe Figur 4. Das Statorstreufeld wird folglich von dem die Drehzahlinformation enthaltenden Rotorstreufeld moduliert.

Erreicht der Rotor die Leerlaufdrehzahl $n_0$ (s = 0), drehen Rotor und Statorstreufeld synchron und in die Rotorwicklungen wird keine Spannung mehr induziert ($U_R = 0$), wodurch das Rotorstreufeld nach Gleichung 6 konstant bleibt.

$$\phi_R(t) = \int U_R(t)dt + \phi_R(t_0) \qquad\qquad (6)$$

Da in diesem Fall $\omega_R = 0$ vorliegt, ergibt sich ein Motorstreufeld $\phi(t)$, das mit der Frequenz von $\phi_S(t)$ rotiert, eine gleichbleibende Amplitude aufweist und einen Mittelwert $\phi_R(t_0)$ besitzt.

In der Praxis erreicht der Rotor nach dem Einschalten der Motorpumpe die Leerlaufdrehzahl $n_0$ aufgrund von Reibungsverlusten nicht. Die in diesem Fall als Betriebs- oder Nenndrehzahl bezeichnete Drehzahl liegt in der Regel wenige Hertz unterhalb der Frequenz der den Stator speisenden Wechselspannung, so dass als Gesamtstreufeld im Motor abgesehen vom Stillstand des Rotors stets ein amplitudenmoduliertes Motorstreufeld vorhanden ist.

Das Motorstreufeld induziert in der Meßspule eine Wechselspannung, im Folgenden Spulensignal genannt, die die gleichen Eigenschaften, wie das Motorstreufeld besitzt. Das Drehzahlsignal stellt sich hier als Hüllkurve des Spulensignals dar, aus dem durch bekannte Verfahren der Amplituden-Demodulation die Drehzahlinformation erhalten werden kann. Erfindungsgemäß wird aus einer fehlenden Amplitudenmodulation auf eine Blockierung der Motorpumpe geschlossen.

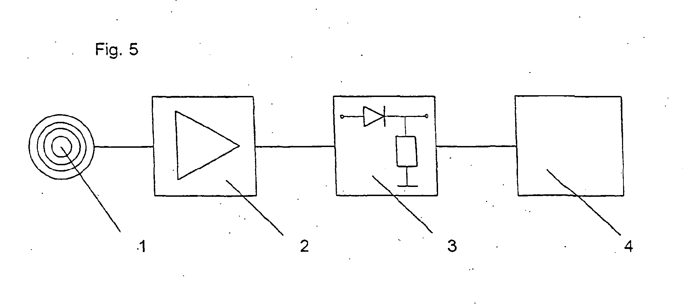

Figur 5 zeigt eine schaltungstechnische Ausführung der Auswerteschaltung, mit der die Drehzahlinformation gewonnen wird. Das geringe Signal der Meßspule 1 wird durch eine Verstärker- und Filterschaltung 2 aufbereitet. Im nachgeschalteten Demodulator 3 wird das Signal demoduliert und die Drehzahlinformation in einem Mikroprozessor 4 ermittelt.

Für elektronisch kommutierte Elektromotoren (ECM), mit einem einen Permanentmagneten aufweisenden Rotor, wird die Lage des Rotorfeldes für eine stabile Drehzahlregelung benötigt. Aus der in der Meßspule induzierten Spannung kann durch Integration des demodulierten Meßsignals nach Gleichung 7 der magnetische Fluss des Rotors und damit seine Lage erfasst werden. Der ECM fährt ungesteuert an, bis die induzierte Spannung ausreicht, um die Rotorlage zu berechnen. Dies ist bereits nach einer vollen Rotorumdrehung möglich.

$$\phi_R(t) = {}_0\!\int^t U_{demoduliert} \, dt \qquad\qquad (7)$$

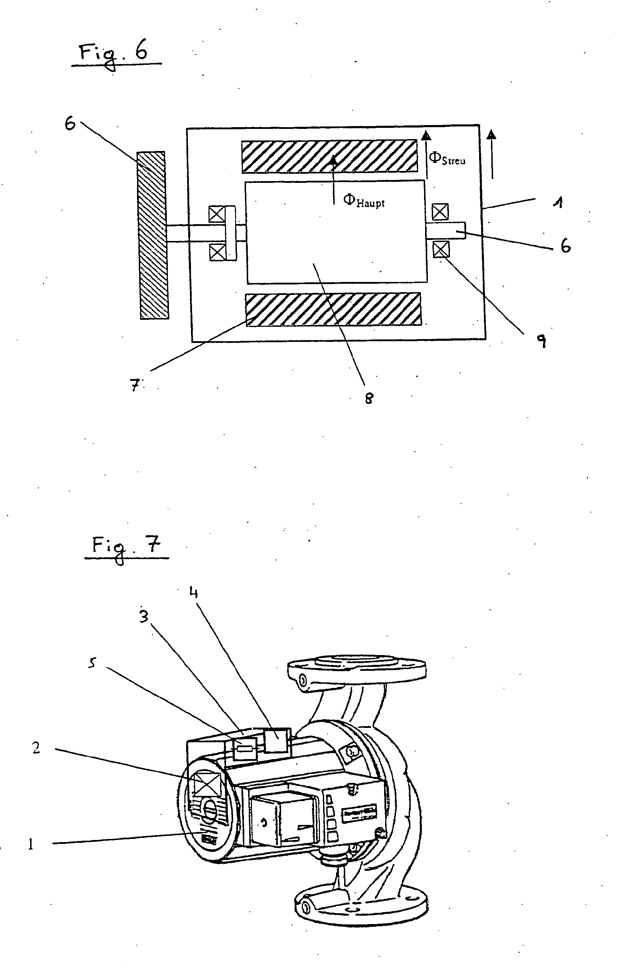

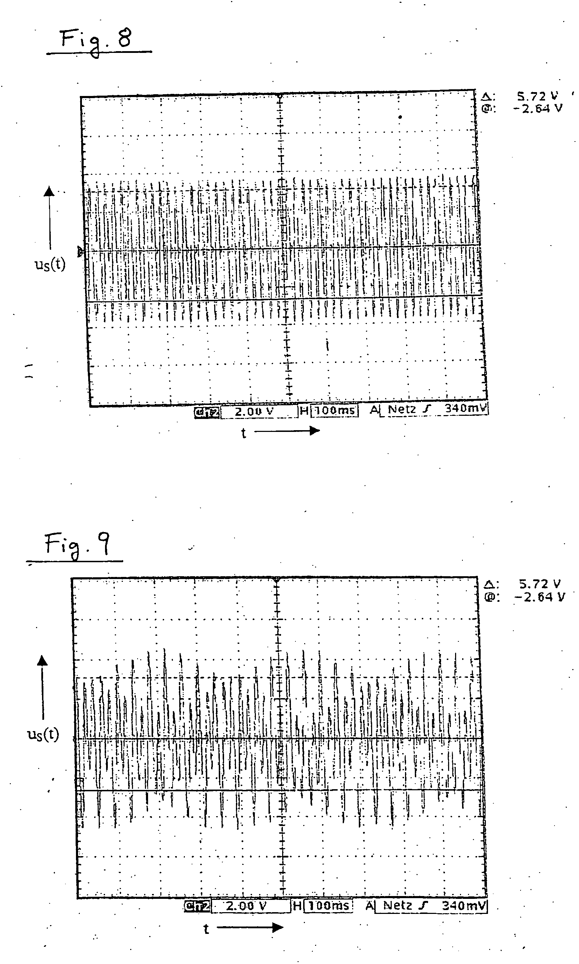

Figur 6 zeigt ein Schema einer Ausführungsvariante einer elektromotorisch betriebenen Pumpe, die die folgenden Komponenten umfasst: Laufrad 6, Stator 7, Rotor 8, Motorlager 9, Motorgehäuse 1 und Motorwelle 6. Durch die Lager 9 wird der Rotor 8 in seiner Längsachse gehalten, wobei je nach Lagerspiel bzw. Lagerverschleiß der Rotor 8 eine geringfügige Taumelbewegung ausführt. Rotor 8 und Stator 7 weisen im Betrieb jeweils ein magnetisches Streufeld auf, die sich gegenseitig zu einem Gesamtstreufeld, dem Motorfeld $\phi_{Haupt}$ überlagern. Ein beispielhaftes charakteristisches Messsignal $u_s(t)$ des Sensorelements an einem Elektromotor respektiver einer von ihm angetriebenen Pumpe mit neuen unverschlissenen Lagern 9, wobei das Messsignal $u_s(t)$ aus der Messung des Motorfeldes $\phi_{Haupt}$ resultiert, ist in Figur 8 als Oszillogramm dargestellt.

Eine geringfügige Amplitudenmodulation d.h. eine annähernd sinusförmige Schwankung der Amplitude ist in dem Messsignal, welches bei Nenndrehzahl aufgenommen wurde, erkennbar. Diese leichte Amplitudenschwankung wird durch das sehr geringe Lagerspiel der unverschlissenen Lager 9 hervorgerufen.

Durch eine auftretende Taumelbewegung des Rotors 8 wird dem Motorstreufeld $\phi_{Haupt}$ eine drehzahl- und/ oder eine rotorlageabhängige Änderung bzw. Schwankung der Amplitude (Modulation) aufgeprägt, so dass die Verwendung der an der Motorwelle 6 auftretenden mechanischen Schwingungen als Maß für die Stärke des Lagerverschleißes ein ausschlaggebendes verlässliches Kriterium für eine Schadenfrüherkennung (early-failure-detection, EFD) darstellt.

Figur 9 zeigt hier ein beispielhaftes charakteristisches Messsignal des Sensorelements bei einer bereits länger im Betrieb befindlichen Pumpe, bei welcher die Lager ein deutlich erhöhtes Lagerspiel aufweisen. Eine starke Amplitudenmodulation ist im Sensorsignal erkennbar. Die Pumpe könnte trotz hohem Lagerspiel noch einen längeren Zeitraum ohne einen Ausfall im Betrieb bleiben, jedoch ist die Restlebensdauer bereits abschätzbar und im Rahmen einer Schadenfrüherkennung als Wammeldungsanzeige sinnvoll. Für die Schadensfrüherkennung könnte hier beispielsweise eine erste Wammeldung "Erhöhter Lagerverschleiß" abgegeben werden.

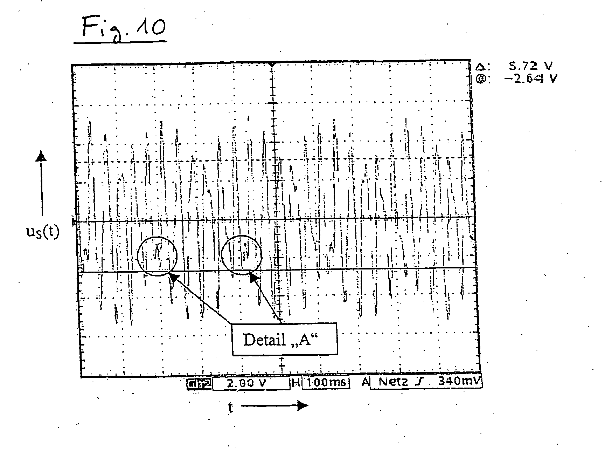

Figur 10 zeigt dagegen ein beispielhaftes charakteristisches Messsignal des Sensorelements bei einer Pumpe mit deutlich verschlissenen Lagern, so dass es bereits zu einem Anschleifen des Rotors am Spalttopf kommt. Das Anschleifen des Rotors ist in Figur 10 mit Detail "A" gekennzeichnet und wirkt sich als höherfrequente Störung im Messsignal aus. Obwohl die Pumpe auch in diesem Fall ein Fördermedium fördern kann, ist die Abgabe einer Wammeldung wie beispielsweise "unzulässiger Lagerverschleiß" und/ oder "Pumpe austauschen" sinnvoll, da mit hoher Wahrscheinlichkeit in kürzerer Zeit mit einem Totalausfall des Pumpenaggregats mit möglichen Folgeschäden zu rechnen ist.

Wie in den Oszillogrammen der Figuren 8 bis 10 zu erkennen ist, ergibt sich aus dem Verschleißzustand der Lager ein charakteristischer Messsignalverlauf des Sensorelements. Durch eine geeignete Auswerteinrichtung lässt sich daher der Verschleißzustand der Lager erfassen und damit eine Lagerdiagnose sowie eine Schadenfrüherkennung realisieren.

Die Modulation des Motorstreufelds wird daher bei dem erfindungsgemäßen Verfahren zur Überwachung des Betriebszustands eines Elektromotors als Maß für den Verschleißzustand der Lager 9 des Elektromotors respektive der von ihm angetriebenen Pumpe gewertet.

Figur 7 zeigt eine weitere Ausführungsvariante einer erfindungsgemäßen Pumpe mit einem Motorgehäuse 1, einem stirnseitig angebrachten elektromagnetischen Sensorelement 2 (Verschleißsensor), einem Klemmenkasten 3 sowie einer Auswerteelektronik 4 und einem Motorstromsensor 5. Der Stromsensor 5 kann bei dieser Ausführungsvariante zusätzlich zum Verschleißsensor 2 zur Erfassung des Betriebszustands verwendet werden, da sich die Modulation des Motorstreufelds auch in der Stromaufnahme des Elektromotors bemerkbar macht. Durch die Verwendung von Verschleiß- und Stromsensor 2, 5 ergibt sich eine besonders fehlersichere Taumelbewegungsdetektion und damit eine eindeutige und zuverlässige Schadensfrüherkennung.

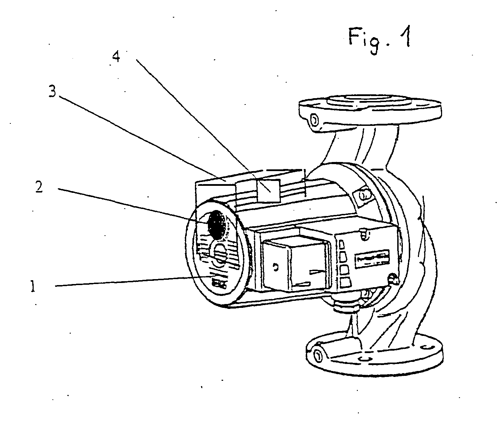

In einer bevorzugten Ausführungsvariante ist das elektromagnetische Sensorelement 2 als Messspule ausgebildet und stellt vorzugsweise dieselbe Messspule 2 aus Figur 1 dar, die auch zur Detektion der Drehzahl bzw. Rotorlage verwendet wird. Das elektromagnetische Sensorelement 2 ist hierbei im Bereich des Streufeldes des Motors angeordnet und erzeugt durch das Motorstreufeld ein auswertbares Messsignal, welches die Information über den Betriebszustand des Elektromotors trägt.

Dadurch dass das Sensorelement 2 außerhalb des Stators angebracht wird, ergibt sich die Möglichkeit, einen Pumpenmotor nachträglich und ohne großen Montageaufwand mit einer Schadenfrüherkennung auszustatten.

In einer weiteren Ausführungsvariante des erfindungsgemäßen Verfahrens wird zusätzlich zur Erfassung des Betriebszustands die Änderung des Betriebszustands detektiert, so dass im Falle einer Betriebszustandsänderung unmittelbar auf einen Lagerverschleiss geschlossen werden kann.

Die Messsignale der Sensoren 2 und 5 werden der Auswertelektronik 4 zugeführt und anschließend ausgewertet. Diese Auswertung kann sowohl im Zeitbereich als auch im Frequenzbereich erfolgen, wobei das Messsignal in Amplituden- und/ oder Frequenzanteile zerlegt wird, welche verschiedenen Betriebszuständen insbesondere Verschleißzuständen der Lager 9 zugeordnet werden. Hier kann insbesondere im Falle des Vorhandenseins bestimmter Frequenzanteile im Messsignal auf eine Schwingung des Rotors 6 und damit zuverlässig auf einen Lagerverschleiß geschlossen werden.

Die Auswerteschaltung weist in einer vorteilhaften Ausprägung einen Mikroprozessor und ein Speicherelement auf. Alternativ kann das Speicherelement auch in dem Mikroprozessor integriert sein. In einer vorteilhaften Ausführung des Verfahrens wird der Betriebszustand und/ oder seine zeitliche Änderung und / oder die Auswertung des Betriebszustands und/ oder seiner zeitlichen Änderung in dem Speicherelement gespeichert und zu einem späteren Zeitpunkt wieder ausgelesen.

Vorteilhaft ist es ferner, wenn im Speicherelement ein Referenzsignal abgespeichert wird, welches dasjenige Messsignal beschreibt, das den ordnungsgemäßen Betriebszustand d.h. den Zustand bei unverschlissenen, unbeschädigten Lagern beschreibt. Eine Schadenfrüherkennung ist damit durch einfachen Vergleich des aktuellen Messsignals mit dem zum ordnungsgemäßen Betriebszustand gehörenden Referenzsignal oder durch den Vergleich zweier zeitlich beabstandeter Betriebszustände oder durch direkte Auswertung einer abgespeicherten Betriebszustandsänderung auf einfache Weise und mit geringem Aufwand möglich.

Im Falle einer Schadensfrüherkennung kann eine Schadensfrühmeldung in Form einer Warnmeldung erfolgen. Diese Warnmeldung kann beispielsweise in Form einer optischen oder akustischen Anzeige erfolgen. Vorteilhaft ist ferner, dass im Falle des Vorliegens eines Lagerverschleißes, bei der Warnmeldung der Verschleißzustand der Lager mit angegeben wird, damit eine unmittelbare Information über die Dringlichkeit eines Eingriffs in den Pumpenbetrieb gegeben ist. Die Ausgabe der Warnmeldung kann dabei direkt am Elektromotor oder an der Pumpe oder mittels Weiterleitung an eine Leittechnik ausgegeben werden.

Aus den dargestellten Zusammenhängen ist ein Verfahren zur berührungslosen Drehzahlmessung von Asynchronmotoren sowie zur Rotorlageerkennung von elektronisch kommutierten Motoren einfach und kostengünstig durch Messung der in einer kleinen Meßspule induzierten Wechselspannung sowie Auswertung des Spulensignals realisierbar. Darüber hinaus kann mittels geeigneter Auswertung des Messsignals auf den Betriebszustand des Elektromotors respektive einer von ihm angetriebenen Pumpe insbesondere auf den Verschleißzustand der Lager des Elektromotors geschlossen werden, wodurch auf besonders einfache Weise eine zuverlässige und sichere Schadenfrüherkennung realisiert werden kann.

## Patentansprüche

1. Verfahren zur berührungslosen Überwachung des Betriebszustandes eines Elektromotors, insbesondere eines als Asynchronmotor oder elektronisch kommutierter Motor ausgebildeten Motors einer Pumpe, der zumindest eine Motorwelle und zumindest ein Lager zur Lagerung der zumindest einen Motorwelle aufweist, wobei zur Erfassung des Betriebszustandes des Elektromotors mindestens ein im Bereich des Streufeldes des Motors angeordnetes elektromagnetisches Sensorelement zur Erzeugung eines auswertbaren Messsignals verwendet wird, wobei das Messsignal die Information über den Betriebszustand des Elektromotors trägt, **dadurch gekennzeichnet, dass** das Sensorelement außerhalb des Stators angebracht wird, und dass aus dem Messsignal, welches durch das Motorstreufeld vom Sensorelement erzeugt wird, die vom Rotorstreufeld bestimmte Schwankung der Amplitude erfasst wird, wobei das Messsignal demoduliert wird und die Schwankung der Amplitude als Maß für den Verschleißzustand der Lager des Elektromotors, insbesondere der von ihm angetriebenen Pumpe gewertet wird, und wobei bei fehlender Modulation auf eine Blockierung geschlossen wird.

2. Verfahren nach Anspruch 1,
**dadurch gekennzeichnet, dass** als Sensorelement eine Messspule verwendet wird.

3. Verfahren nach einem der vorherigen Ansprüche,
**dadurch gekennzeichnet, dass** zur Bestimmung des Betriebszustandes der Pumpe und/ oder des Elektromotors zusätzlich der Motorstrom insbesondere die Modulation des Motorstroms erfasst und ausgewertet wird.

4. Verfahren nach einem der vorherigen Ansprüche,
**dadurch gekennzeichnet, dass** im Falle einer Schadensfrüherkennung, insbesondere einer Blockierung, eine Schadensfrühmeldung in Form einer Warnmeldung und/ oder einer Anzeige des Verschleißzustandes direkt am Elektromotor oder mittels Weiterleitung an eine Leittechnik ausgegeben wird.

**5.** Verfahren nach Anspruch 4,
**dadurch gekennzeichnet, dass** zur Schadenfrüherkennung der Betriebszustand und / oder die Änderung des Betriebszustandes in einem Speicherelement vorzugsweise in einem Mikroprozessor abgespeichert und zu einem späteren Zeitpunkt ausgelesen wird.

**6.** Verfahren nach Anspruch 5,
**dadurch gekennzeichnet, dass** an Hand des im Speicherelement abgelegten Betriebszustandes und/ oder seiner Änderung ein Vergleich zwischen den Betriebszuständen insbesondere zwischen den Verschleißzuständen der Lager erfolgt.

**7.** Verfahren nach Anspruch 5,
**dadurch gekennzeichnet, dass** im Speicherelement ein Referenzsignal abgespeichert wird, welches dasjenige Messsignal beschreibt, das den ordnungsgemäßen Betriebszustand der Pumpe und/ oder des Elektromotors beschreibt.

**8.** Verfahren nach Anspruch einem der Ansprüche 2 bis 7,
**dadurch gekennzeichnet, dass** die Messspule stirn- oder mantelseitig des Motors, angebracht wird.

**9.** Verfahren nach einem der Ansprüche 2 bis 8,
**dadurch gekennzeichnet, dass** der Außendurchmesser der Messspule derart gewählt wird, dass er maximal ein Drittel des Außendurchmessers des Motorstators beträgt.

**10.** Verfahren nach einem der vorherigen Ansprüche,
**dadurch gekennzeichnet, dass** das Messsignal einer Auswerteschaltung zugeführt wird.

**11.** Verfahren nach Anspruch 10,
**dadurch gekennzeichnet, dass** das Messsignal in Amplitudenanteile zerlegt wird, welche verschiedenen Betriebszuständen, insbesondere Verschleißzuständen der Lager zugeordnet werden.

**12.** Verfahren nach einem der vorherigen Ansprüche,
**dadurch gekennzeichnet, dass** im Falle einer Blockierung über einen potenzialfreien Kontakt eine Störmeldung durch eine Störleuchte und/oder ein Display ausgegeben wird.

**13.** Verfahren nach einem der vorherigen Ansprüche,
**dadurch gekennzeichnet, dass** die Auswertung des Messsignals durch einen Mikroprozessor erfolgt.

**14.** Verfahren nach einem der vorherigen Ansprüche,
**dadurch gekennzeichnet, dass** die Auswertung des Messsignals durch einen Demodulator mit nachgeschaltetem Komparator erfolgt.

**15.** Verfahren nach einem der vorherigen Ansprüche,
**dadurch gekennzeichnet, dass** die Messspule und die Auswertelektronik im Klemmenkasten des Motors angeordnet werden.

**16.** Verwendung des Verfahrens nach einem der vorherigen Ansprüche an einem Elektromotor einer Spaltrohrpumpe.


**Claims**

**1.** Method for contactless monitoring of the operating state of an electric motor, in particular of a motor of a pump, which motor is in the form of an asynchronous motor or electronically commutated motor and has at least one motor shaft and at least one bearing for bearing the at least one motor shaft, with at least one electromagnetic sensor element, which is arranged in the region of the stray field of the motor, for generating a measurement signal which can be evaluated being used for the purpose of detecting the operating state of the electric motor, with the measurement signal carrying the information about the operating state of the electric motor, **characterized in that** the sensor element is fitted outside the stator, and **in that** the fluctuation in the amplitude which is determined by the rotor stray field is detected from the measurement signal, which is generated through the motor stray field by the sensor element, with the measurement signal being demodulated and the fluctuation in the amplitude being evaluated as a measure of the wear state of the bearings of the electric motor, in particular of the pump which is driven by it, and with the conclusion being drawn that blocking is present when there is no modulation.

2. Method according to Claim 1, **characterized in that** a measurement coil is used as the sensor element.

3. Method according to either of the preceding claims, **characterized in that**, in addition to the motor current, in particular the modulation of the motor current is detected and evaluated in order to determine the operating state of the pump and/or of the electric motor.

4. Method according to one of the preceding claims, **characterized in that**, in the event of early identification of damage, in particular blocking, an early notification of damage in the form of a warning notification and/or an indication of the wear state is output directly at the electric motor or by means of forwarding to a control system.

5. Method according to Claim 4, **characterized in that**, for the purpose of early identification of damage, the operating state and/or the change in the operating state is stored in a memory element, preferably in a microprocessor, and is read-out at a later time.

6. Method according to Claim 5, **characterized in that** a comparison is made between the operating states, in particular between the wear states of the bearings, on the basis of the operating state which is stored in the memory element, and/or the change in said operating state.

7. Method according to Claim 5, **characterized in that** a reference signal is stored in the memory element, the said reference signal describing that measurement signal which describes the correct operating state of the pump and/or of the electric motor.

8. Method according to one of Claims 2 to 7, **characterized in that** the measurement coil is fitted at the end or on the casing of the motor.

9. Method according to one of Claims 2 to 8, **characterized in that** the outside diameter of the measurement coil is selected such that it amounts to a maximum of one third of the outside diameter of the motor stator.

10. Method according to one of the preceding claims, **characterized in that** the measurement signal is supplied to an evaluation circuit.

11. Method according to Claim 10, **characterized in that** the measurement signal is broken down into amplitude components which are assigned to different operating states, in particular wear states of the bearings.

12. Method according to one of the preceding claims, **characterized in that**, in the event of blocking, a fault notification is output by a fault lamp and/or a display via a potential-free contact.

13. Method according to one of the preceding claims, **characterized in that** the measurement signal is evaluated by a microprocessor.

14. Method according to one of the preceding claims, **characterized in that** the measurement signal is evaluated by a demodulator with a comparator connected downstream.

15. Method according to one of the preceding claims, **characterized in that** the measurement coil and the evaluation electronics are arranged in the terminal box of the motor.

16. Use of the method according to one of the preceding claims in an electric motor of a canned pump.

**Revendications**

1. Procédé de surveillance sans contact de l'état de fonctionnement d'un moteur électrique, notamment d'un moteur de pompe réalisé sous la forme d'un moteur asynchrone ou d'un moteur à commutation électronique, ledit moteur comportant au moins un arbre de moteur et au moins un palier de roulement pour le positionnement de l'au moins un arbre de moteur, au moins un élément de détection électromagnétique disposé dans la région du champ de dispersion du moteur pour la détection de l'état de fonctionnement du moteur électrique étant utilisé pour produire un signal de mesure analysable, le signal de mesure transportant l'information relative à l'état de fonctionnement du moteur électrique, **caractérisé en ce que** l'élément de détection est placé à l'extérieur du stator et **en ce que** l'oscillation de l'amplitude déterminée par le champ de dispersion du rotor est détectée à partir du signal de mesure produit par le champ de dispersion du moteur provenant de l'élément de détection, le signal de mesure étant démodulé et l'oscillation de l'amplitude étant analysée pour servir de mesure de détermination de l'état d'usure du palier de roulement du moteur électrique, notamment de la pompe entraînée par lui, et un blocage étant décidé en cas de modulation défaillante.

2. Procédé selon la revendication 1, **caractérisé en ce que** l'élément de détection utilisé est une bobine de mesure.

3. Procédé selon l'une quelconque des revendications précédentes, **caractérisé en ce qu'**on détecte et qu'on analyse en outre le courant moteur, notamment la modulation du courant moteur, pour déterminer l'état de fonctionnement de la pompe et/ou du moteur électrique.

4. Procédé selon l'une quelconque des revendications précédentes, **caractérisé en ce qu'**en cas de dépistage précoce de dysfonctionnement, notamment d'un blocage, un message précoce de dysfonctionnement prenant la forme d'un message d'avertissement et/ou d'un affichage de l'état d'usure est envoyé directement au moteur électrique ou indirectement à un élément technique de pilotage par le biais d'un câble supplémentaire.

5. Procédé selon la revendication 4, **caractérisé en ce que** l'état de fonctionnement et/ou la modification de l'état de fonctionnement sont mémorisés dans un élément de mémoire, de préférence dans un microprocesseur, pour réaliser le dépistage précoce de dysfonctionnement et **en ce que** cet état est utilisé à un moment ultérieur.

6. Procédé selon la revendication 5, **caractérisé en ce qu'**une comparaison entre les états de fonctionnement, notamment entre les états d'usure du palier de roulement, est réalisée à l'aide de l'état de fonctionnement et/ou de sa modification mémorisés dans l'élément de mémoire.

7. Procédé selon la revendication 5, **caractérisé en ce qu'**un signal de référence est mémorisé dans l'élément de mémoire, ledit signal décrivant ledit signal de mesure décrivant l'état de fonctionnement normal de la pompe et/ou du moteur électrique.

8. Procédé selon l'une quelconque des revendications 2 à 7, **caractérisé en ce que** la bobine de mesure est disposée sur le côté avant ou d'enveloppe du moteur.

9. Procédé selon l'une quelconque des revendications 2 à 8, **caractérisé en ce que** le diamètre extérieur de la bobine de mesure est choisi de telle sorte qu'il représente au maximum un tiers du diamètre extérieur du stator de moteur.

10. Procédé selon l'une quelconque des revendications précédentes, **caractérisé en ce que** le signal de mesure est amené à un circuit d'analyse.

11. Procédé selon la revendication 10, **caractérisé en ce que** le signal de mesure est divisé en fractions d'amplitude associées à différents états de fonctionnement, notamment différents états d'usure du palier de roulement.

12. Procédé selon l'une quelconque des revendications précédentes, **caractérisé en ce qu'**en cas de blocage, un message d'anomalie est transmis par le biais d'un voyant d'anomalie et/ou d'un écran, par l'intermédiaire d'un contact exempt de potentiel.

13. Procédé selon l'une quelconque des revendications précédentes, **caractérisé en ce que** l'analyse du signal de mesure est réalisée par le biais d'un microprocesseur.

14. Procédé selon l'une quelconque des revendications précédentes, **caractérisé en ce que** l'analyse du signal de mesure est réalisée par le biais d'un démodulateur équipé d'un comparateur connecté en aval.

15. Procédé selon l'une quelconque des revendications précédentes, **caractérisé en ce que** la bobine de mesure et le système électronique d'analyse sont disposés dans un bornier du moteur.

16. Utilisation du procédé selon l'une quelconque des revendications précédentes dans un moteur électrique de pompe

à tube fendu.

Fig. 1

Fig. 2

Fig. 3

Fig. 4

13

Fig. 5

1      2      3      4

Fig. 6

Fig. 7

Fig. 8

Fig. 9

Fig. 10

Detail „A"

$u_S(t)$

t ⟶

Δ:  5.72 V
@:  −2.64 V

2.00 V   |H|100ms|  A| Netz ∫  340mV

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3339299 A1
- DE 3102655 A1
- DE 4108522
- WO 9832214 A1